# EUROPEAN PATENT APPLICATION

(11) **EP 2 075 607 A1**
(43) Date of publication of application: **01.07.2009**
(21) Application number: 07255068.4
(22) Date of filing: 28.12.2007
(51) Int. Cl.: G02B 6/44, H02G 1/08, G01P 13/00, G01F 1/00

(54) **Arrival detection of air flow and a fibre unit during fibre blowing installation using relfected light**

(71) Applicant: British Telecommunications public limited company, 81 Newgate Street London EC1A 7AJ (GB)
(72) Inventor: The designation of the inventor has not yet been filed
(74) Representative: Sayer, Robert David

(57) **Abstract**

A device for use with a conduit (4) having a first conduit end and a conduit second end, into which conduit a cable (2) can be installed using a flow of air into the first conduit end, the device being suitable for confirming that the air is flowing out of the from the second conduit end, the device comprising
- a housing (20),
- means (21) to enable connection of the device to the second conduit end,
- a light source (35) to output a light beam (31) onto a reflective surface (26),
- an optical receiver (32) to detect a reflected light beam (33) comprising a reflection of the light beam from the reflective surface,
- a detector arranged to detect a light level or a change in a light level, wherein the reflective surface is configured to distend in a flow of air, so that in use, the optical receiver detects a changed level in the reflected light beam.
At the same time, device can also be used to further sense the arrival of a fibre unit fed into the mouth of the conduit at the remote or far end of a blown fibre installation.

## Description

The present invention relates to the installation of cables, such as optical fibre units, wires, electrical cables or the like. More specifically, but not exclusively, the present invention relates to the blowing of fibre unit cables through pre-laid conduits.

Optical fibres are widely used within telecommunication systems for high-speed information transfer, particularly in the core or backbone network. With the advent of fibre to the premises (FTTP), the conduits will further extend to and into commercial and residential premises. Indeed it is a fundamental part of the push to FTTP in e.g. the UK, that substantially all the network comprises optical fibre, extending from the core network to as many end customers, both commercial and residential, as possible. This involves the installation of millions of kilometres of optical fibre across the network, especially at the local access level which had previously been served by copper. To achieve widespread take-up, the optical fibre installation process needs to be speedy, cost- and effort-efficient.

An optical fibre unit, which could comprise a single optical fibre, or a bound bundle of typically 2 to 24 optical fibres, can be installed using what is known as the "blown fibre" method, described in EP108590. In this method, a fibre unit is propagated along a hollow tube pre-laid along the desired route, where compressed air is fed, or "blown" into the mouth of the tube. The viscosity of the flow of air travelling along inside the tube, together with the friction on the outer surface of the fibre unit, helps to carry the fibre unit along the length of the tube.

The tubes or conduits typically are made of plastic, each with a typical inner diameter of 2.5 to 6 mm or more, and are usually provided in a bound bundle comprising up to 24 or more tubes, which are held together within a protective outer sheath. The tubes usually comprise a continuous span between convenient access points such as surface boxes, inspection chambers down man holes, or near telephone poles. Each fibre conduit tube can receive at least one fibre unit comprising one or more individual optical fibres. Large numbers of tube conduits - and bundles of conduits - are pre-installed across the access network and the distribution network between the local exchanges and the customer premises, typically to locations which may require a future fibre connection.

When it is decided to populate these pre-installed tubes, the fibre cable or unit is installed in each tubular span by blowing it down the conduit from one end; alternatively the unit could be blown down a concatenation of spans in a single step if circumstances permit. This is repeated for each span, or concatenation of spans, until a continuous fibre path has been laid between the end points of the whole route.

A tubular path can be described between two access points, which may be hundreds of metres apart, by a single length of conduit tube. The conduit path may alternatively comprise a number of lengths of physically separate conduit tubes which are connected together e.g. in series. Either way, it is crucial to choose the correct conduit path during installation, so that the fibre unit emerges at the desired destination end. During installation however, the operator at one of the installation points would be presented with a large and potentially confusing number of conduit tube openings, each representing a path leading to a destination. The tube openings are usually mapped to their destinations e.g. by colour-coding. If however the tube openings are wrongly mapped, or the records otherwise inaccurate, mistakes can be made in attempts to identify the correct conduit path and the correct tube opening leading to the desired destination. This is especially so if the working conditions are poor e.g. in adverse weather up a telephone pole or down a manhole or in poor lighting.

Where the path comprises a number of tube lengths connectorised together, yet another problem may lie in broken connections between lengths of conduit tubes within the network, so that the fibre unit may get lost within the system during installation and never emerge at the destination. Yet another issue may be the possibility that the fibre unit may, during installation, could be impeded by an imperfect connection or a tight bend or some other source of friction in the conduit, and again never emerge at the destination.

For any of these or other reasons, the fibre unit may, during installation, emerge in the wrong place, or in an extreme case, not at all. Add to that some uncertainty about the exact length of the conduit route down which the fibre unit is being installed, so that the operator may not even know in a timely manner when something has gone wrong.

The current response to this problem is to use two operators during installation, one at each end of the installation conduit path. The second operator at the destination end of the tubular path is required because the destination or remote end is often some distance away - up to a kilometre or more - from the head end. The operator at the head end is therefore unable to know the status of the remote end during an installation without a second operator located there reporting the status back to the head end.

During a typical installation session, the first operator situated at the head end of the conduit fits a protective slug or bead on the tip of the fibre unit, then feeds this and compressed air into the mouth of the conduit with fibre installation apparatus - known in the art as a "blowing head" which is described in general in e.g. WO88/00713. Meanwhile the second operator locates himself at the desired end point of the fibre installation. The process commences by directing compressed air into the mouth of the head end conduit. If the air is directed into the correct conduit so that the tubular path leads to the desired destination, the remote end operator can eventually sense the arrival of the air with an airflow meter temporarily connected to the end of the conduit, or more simply by feeling the airflow exiting the conduit against his hand if the airflow is sufficiently high. He then communicates this to the head end operator by radio or other means, to confirm to the head end operator that the air is applied to the correct conduit. The head end operator upon receiving the news, then blows the fibre unit into the conduit through to the remote end, whereupon the remote end operator advises his colleague on its arrival. The head end operator then turns off the air supply and the blowing head, and the installation process is complete.

This process is labour-intensive as two operators must work on a single installation. This is in turn drives up the overall cost of optical fibre installation, a problem now especially significant in the FTTP context with the considerable installation volumes involved.

Various methods requiring only a single operator installation of blown fibre have been developed, to obtain a significant saving in manpower and cost requirements. In the simplest method, the length of the conduit route is known, allowing the operator to know that the fibre has (probably) arrived at the remote end when the required length of fibre unit has been played out. This relies on the map record of conduit route being up to date and accurate, and presumes a completely smooth and obstruction-free conduit route. Neither of these can be guaranteed in practice.

Another known practice is to install at the remote end of the conduit a barrier of porous material such as an "airstone" which is constructed of a porous material which allows air through but which will stop further progress of the fibre unit. The airstone is temporarily placed at the mouth of the destination remote end of the tube conduit. When the fibre ceases to travel down the tube, this is an indication that the far end of the fibre may have reached the destination end and has been retained by the airstone barrier. However, lack of further progress is ambiguous as to whether the fibre unit has indeed reached the porous airstone at the destination end, or if instead the fibre unit is caught on an obstruction at some intermediate point along the length of the conduit.

These, together with other methods like those described in WO91/03756 or WO98/12588, also describe how fibre arrival can be detected by the single operator at the head end of the installation; the initial step of detecting that the compressed air fed into the head tube end is not addressed in the above techniques.

One method, developed by the applicants of the present case and described in WO2006/103419 does describe a device which permits the detection of the arrival of both air as well as the remote end of the fibre unit at the opening of the remote tube end. The device uses a low-mass wind vane which rotates in the presence of airflow, and which rotation is stopped when the fibre end arrives and gets "caught" in the blades of the wind vane. The change in status of the wind vane can be captured as indicia of air or fibre arrival.

Yet another method developed by the applications uses the inherent property of optical fibre to transport light along its length. In WO2007/104910, light introduced into the fibre at the head end is reflected from the cleaved leading end of the fibre. When the fibre end arrives at the remote end it enters a reservoir of index-matching gel, which has the effect of dispersing the light from the fibre. Detection of a fall in the level of reflected light indicates that the fibre has reached the reservoir and that installation is complete. This method requires the use of a specially-designed bead and the transmission from the head end to the remote end, and the reflection of the same again along the entire length of the fibre unit. This may be difficult in practice to implement and monitor, especially over considerable installation lengths of a kilometre or more.

In general, the present invention provides methods and devices for aspects relating to the installation of cables such as optical fibre units into conduit tubes using e.g. the blown fibre method, so that in particular, a single operator can operate substantially on his own at one end, to determine if compressed air and/or the fibre unit fed into a conduit has reached its intended destination. The invention can be used where the operator has to choose between one of a number of conduits, or where there is a single conduit but where it is desirable to unambiguously confirm that the air and/or the fibre unit will reach or reaches the intended destination. In view of the possible volumes that may be deployed in FTTP initiatives, the invention also addresses the need for cost-efficiency in being relatively cheap to manufacture and simple to operate.

A first aspect of the present invention provides a device for use with a conduit having a first conduit end and a conduit second end, into which conduit a cable can be installed using a flow of air into the first conduit end, the device being suitable for confirming that the air is flowing out of the from the second conduit end, the device comprising
- a housing,
- means to enable connection of the device to the second conduit end,
- a light source to output a light beam onto a reflective surface,
- an optical receiver to detect a reflected light beam comprising a reflection of the light beam from the reflective surface,
- a detector arranged to detect a light level or a change in a light level,
wherein the reflective surface is configured to distend in a flow of air, so that in use, the optical receiver detects a changed level in the reflected light beam.

This is a device for confirming that a supply of compressed air fed into a selected conduit end at the head end, has arrived at and is flowing out at the remote end. This indicates to the operator that he has selected the correct tube or conduit end. The detection of the air flow at the far end is performed by monitoring the level of light intensity picked up by an optical detector within the housing of the sensor device. A light beam is shone onto a flexible reflective surface, which reflects off to be detected by the optical receiver. When air from the head end starts flowing through the housing, this displaces the reflective membrane slightly away from the direct detection path of the receiver, thus reducing or otherwise changing the light level detected at the receiver. A processor converts this change into a status signal which is sent to the operator at the head end.

In preferred embodiments, the air flow through the housing is vented to the atmosphere. This can be achieved e.g. by providing vents in the wall of the housing, but in the embodiment this is done by incorporating apertures in a diaphragm arrangement which includes the reflective surface.

In a second aspect of the present invention, there is provided a device for use with a conduit having a first conduit end and a conduit second end, into which conduit a cable can be installed using a flow of air into the first conduit end, the device being suitable for confirming that the cable is exiting the second conduit end, the device comprising
- a housing,
- means to enable connection of the device to the second conduit end,
- a light source to output a light beam onto a reflective surface,
- an optical receiver to detect a reflected light beam comprising a reflection of the light beam from the reflective surface,
- a detector arranged to detect a light level or a change in a light level,
wherein in use, the cable impinges upon and distends the reflective surface, so that the optical receiver detects a changed level in the reflected light beam.

In this aspect of the invention, a device of essentially the same construction as that of the first aspect is used to confirm that a fibre unit cable fed into the conduit at the head end has reached the remote end. This is achieved by the fibre unit perturbing the membrane, to produce a light level which is again distinct from the first light level change which had signified air flow arrival in the housing. In preferred embodiments, the diaphragm member is so distended that the reflected light beam takes a direction which the optical receiver cannot detect at all. This provides a clear indication of fibre arrival, which again can be used to generate a status signal to send to the operator at the head end. In variations which may be appreciated by the skilled person, the further light level obtained by the impingement of the fibre unit on the flexible diaphragm is merely a lower level of light (instead of zero light), but one which is distinguishable and indicative of a change in status.

In further aspects of the present invention, there are provided systems and methods using and corresponding to the devices of the invention.

Preferred embodiments of the invention will now be described, by way of example only, with reference to the accompanying drawings, in which:
Figures 1A and 1B depict views of a sensor device of the invention;
Figures 2A and 2B depict the sensor device in use during airflow and fibre arrival detection;
Figures 3A to 3C depict an alternative embodiment of the invention;
Figures 4A and 4B depict a further alterative embodiment of the invention;
Figure 5 depicts a modular embodiment of the invention;
Figures 6A and 6B depict an alternative modular embodiment of the invention;
Figure 7 depicts the main components of apparatus used in a blown fibre installation at the head end;
Figures 8A to 8C depict views of an enclosure of the device;
Figure 9 depicts a view of an alternative enclosure of the device; and
Figures 10A and 10B depict a further alternative enclosure of the device.

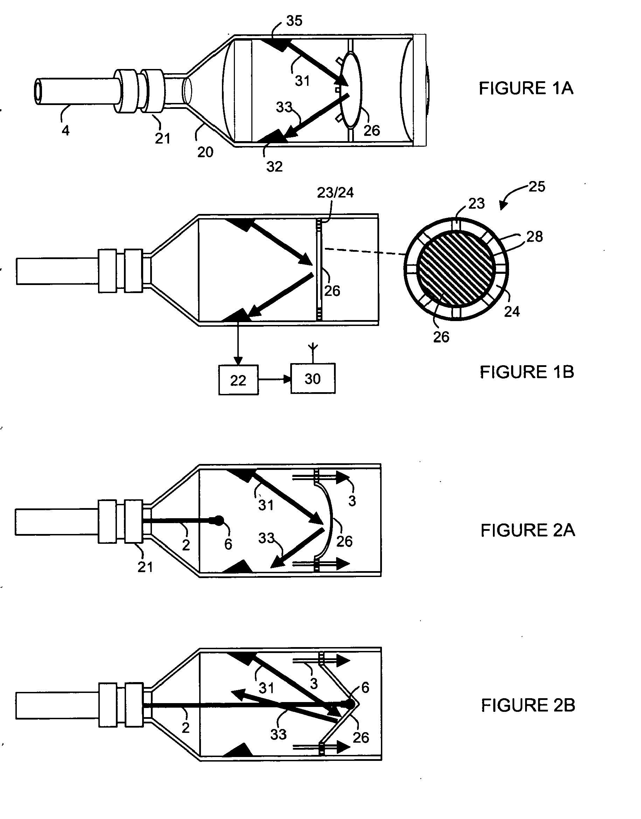

Figures 1A and 1B depict a first embodiment of the invention. As shown in Figure 1A, it comprises a substantially cylindrical or tubular housing (20) which is open at both ends. A first open end is configured to connect (21) with the mouth of the optical fibre tube at the remote end of the installation e.g. in a friction fit. The housing can be fabricated from an injection-moulded plastic, which is lightweight and relatively simple and cheap to manufacture. In the version shown in e.g. Figure 1B, the housing includes a frustoconical section leading to a relatively enlarged section which contains most of the operative components of the device. The overall diameter of the enlarged portion of the housing may thus exceed that of the conduit (4), for reasons explained which will be set out below. The relative sizes of the device housing and the conduit are however only indicative, and it is within the scope of the invention to dimension the housing so that it has about the same external diameter as the conduit, again as further described below.

The housing includes a flexible reflective arrangement (25), which in this embodiment includes a disc-shaped flexible diaphragm member (26) comprising, or including, a reflective element, which can comprise a thin and pliable plastic or polymer which has been coated with a highly reflective metallised plastic or nylon film. This diaphragm member is attached by its outer rim to a ring arrangement (28), which can comprise two relatively rigid plastic rings to provide adequate mechanical support for the flexible diaphragm member. The entire flexible reflective arrangement (25) is held axially in place within the housing as shown in e.g. Figure 1B. The diaphragm may also in some embodiments, be anchored directly onto the interior wall of the housing without use of a support structure such as the ring arrangement (28).

The flexible reflective arrangement includes at least one air hole or vent (24) disposed substantially along the circumference of the disc of the diaphragm member. In the embodiment shown in e.g. Figure 1B, the air vents are located between anchors (23) which span the distance between the two rings, so that when installed within the housing, the air vents are disposed substantially along the inner surface of the housing wall away from the central axis of the housing. Other arrangements for the air vents in the flexible reflective arrangement are of course, possible.

There is also within the housing an optical transmitter (35) which directs a light beam (31) (which could be a light emitting diode (LED) or a laser) to shine onto the reflective diaphragm (26), and an optical receiver (32) which can pick up or detect the reflected light beam (33) reflecting off the reflective diaphragm. In the embodiment shown in e.g. Figure 1B, the optical transmitter and receiver are configured to ouput the light beam towards the diaphragm, which is reflected off the reflective material at an acute angle as a reflected beam to the receiver. In preferred embodiments, the reflected beam should be sufficiently narrow so that a movement or displacement in the reflecting surface will cause the beam to reflect in a different direction, which may be detected by the optical receiver as a reduced level or intensity of light. In certain situations and embodiments, no light may be detected by the receiver at all. In this exemplary implementation, the reflected light beam direction is affected even upon a small movement or displacement of the reflective surface. To aid the creation of a narrow light beam, the light source (35) is arranged to precisely direct or collimate the light.

The light beam or optical signal output by the transmitter may be of constant level or intensity, or its level and/or intensity could be modulated to produce a distinctive signal that the receiver is configured to more easily detect against any background noise e.g. in the form of "stray" light within the device housing. The receiver is connected to a processor (22) which is arranged to amplify and convert the received light signal into a status signal capable of transmission over a radio channel (30).

The use of the sensor device to sense a flow of air (3) from the mouth of the conduit at the remote or far end of a blown fibre installation will now be described. At the start of the installation operation, the operator travels to the remote or destination end of the installation, and connects the above sensor device to the mouth of the conduit from which it is hoped that the compressed air fed from the head end, will emerge. The device is powered on. The housing should fit snugly to the conduit end via the connector (21) to ensure that minimum air leakage occurs at the junction between the conduit and the device housing. At this point, illustrated in e.g. Figure 1B, no air has yet been fed into the conduit or tube, so within the conduit, at the remote conduit end, and within the housing of the sensor device, the air pressure is at a steady state level and air flow is zero. In particular, the diaphragm at this stage presents a substantially flat surface to the optical beam from the transmitter at this stage, so that most, or a maximum of, the light (31) output from the light source is reflected to, and detected by, the receiver.

The intensity of the light signal is an indication that there is no activity within the housing by way or air or fibre movement, and this status e.g. "X" is transmitted to the operator when he moves to the head end of the installation as a status signal "X". Usefully, this status signal "X" can also be used to indicate that the device is active and functioning in a "ready" state which can be a confirmation and assurance to the operator located at the head end before starting the installation process.

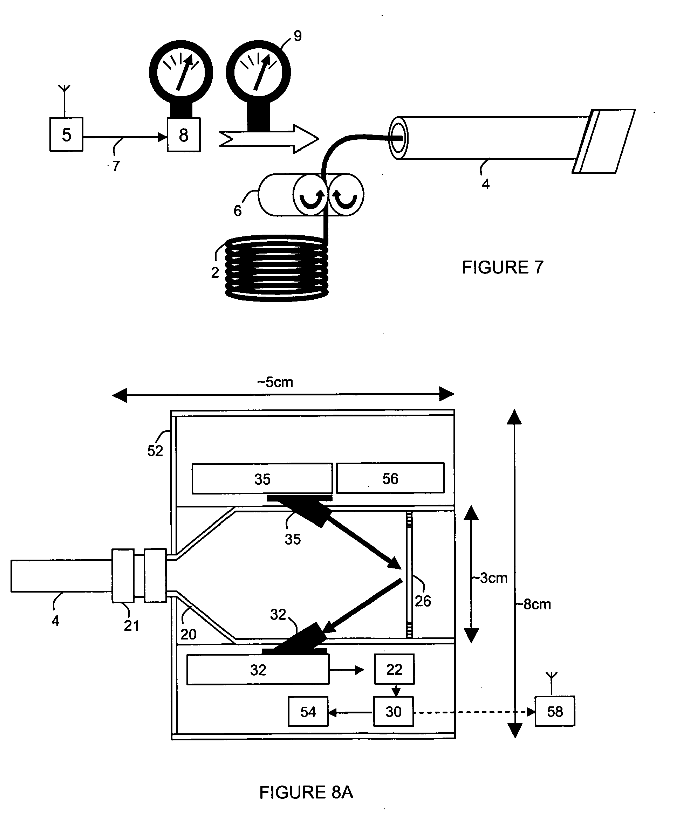

After attaching the sensor device to the conduit end, the operator returns to the head end of the installation and selects a conduit which hopefully represents the start of the conduit path which terminates at the conduit end on which the device had been placed. He then starts the installation process using the apparatus shown in Figure 7 i.e. a compressor (8) and a blowing head (6), to direct compressed air and the fibre unit into the conduit.

If the correct conduit (4) out of the plurality of available conduits has been selected, air (3) flows through the conduit and out into the sensor device housing (20). The air flow and/or the increase in the air pressure within the housing causes the reflective diaphragm (26) to move: specifically the flexible material is distended or "balloons" in the direction of the air flow, as shown in Figure 2A. The air vents (24) allow the compressed air to flow past the anchors (23) holding the diaphragm member within the flexible reflective arrangement (25), and out the open exhaust end to atmosphere. This airflow is of course essential to the blown fibre process. Typically, the force imparted by the air flow through the housing on the diaphragm is relatively low, so that the flexible reflective surface is only slightly disturbed or distended and the diaphragm distension has a relatively gentle bulging profile as shown in e.g.

Figure 2A.

The concaving of the reflective diaphragm surface in the direction of the airflow causes a disruption of the reflection of the beam (31) from the optical transmitter. This causes the receiver to detect a reduced level of light, and this is processed to generate a new status, e.g. "Y", which is communicated to the operator via the radio channel (30).

In one aspect of the invention, the sensor device is used only to detect a flow of air within the housing which represents that the correct conduit was selected at the head end to direct air into. In this aspect, the light signal during status "Y" need only be at a level detectably lower than that during status "X". Thus, the reflected light beam (33) may be reflected off the diaphragm member in a slightly different direction or angle, from a beam direction during status "X" to present a reduced level reading. Alternatively, the reflected light beam may be directed away from the optical receiver so as to completely miss detection. In either case the reduced light signal serves to indicate air arrival at the far end.

In the preferred embodiment where a narrow light beam is employed, even a slight disturbance will reduce the level of the light signal detected by the optical receiver to an extent to be distinguishable from the maximum signal level indicated by status signal "X". Thus, detected light level "Y" must be distinguishable from the light level detected during status "X". It is unlikely that a signal at a particular precise level will be unfailingly received in practice, such as during times of unsteady air flow through the sensor housing e.g. when the fibre unit led by its bead first enters the housing. This may perturb the air flow and the degree to which the reflective diaphragm is displaced, which affects the signal level detected by the receiver. To increase the robustness of the performance of the sensor device in view of the above, the processor (22) is configured so that a certain pre-defined range of light beam levels centred on a fundamental is taken to represent either status "X" or "Y" respectively. Thus, a small range of light signal intensity levels may be detected during status "X" and in practice, a perhaps larger range of values may denote status "Y".

The detected status indication is then conveyed to the operator at the head end via the radio channel (30). Upon receiving the transmitted signal for status "Y", the operator can then be sure that he has selected the correct conduit for feeding the compressed air in, and moreover that the conduit path to the destination remote end is not broken and free from obstruction.

Of course, if the operator did not feed the air down the correct conduit, none of the above will occur. In such a case, the operator will realise, from not receiving any signal from the remote end after a suitable time period, that something is amiss. He can then take appropriate steps e.g. selecting another conduit end to connect to the air compressor. He will at least be aware that the fibre unit should not be installed into the first-chosen tube.

The use of the device to further sense the arrival of a fibre unit fed into the mouth of the conduit at the remote or far end of a blown fibre installation will now be described.

First, at the head end, a supply of fibre unit is prepared by crimping or otherwise attaching a slug or a bead (6) to the tip of its leading end, which protects the fragile glass fibre from damage. The bead typically has a rounded end which eases the fibre unit's progress through the conduit path. It is often made from brass as a preferred material as it does not rust. After the operator at the head end receives confirmation by RF or by e.g. a short message service text message that air is flowing from the desired destination conduit, a fibre unit (2) is fed into the same conduit (4) into which the compressed air is being fed.

Referring now to Figure 2A, the fibre unit (2) led by the bead (6) advances out of the conduit opening at the remote end, into and through the housing of the device as shown. The progress of the leading end of the cable protected by the bead through the housing is eventually halted by the diaphragm member (26). The size, shape and locations of the air vents (24) along the circumference of the diaphragm member are constrained by this requirement. As the force exerted on the diaphragm by the leading end of the fibre unit is greater than that of the air flow, the impact of the bead of the fibre unit carried along on the air flow eventually causes the already-distended diaphragm to deform or deflect even further and/or more sharply as shown in Figure 2B. The reflective diaphragm may be designed to rupture under increasing air pressure from the airflow into the housing. Alternatively, the membrane may be configured to resist any further advance by the bead. In either case the reflected light signal of status "Y" is substantially interfered with.

The components of the device are angled, sized and otherwise arranged to obtain the result that, at this point, the reflected beam (32) will be directed in a direction and/or angle that either cannot be detected by the optical receiver (32), or else to further decrease the reflected light available for detection by the receiver.

The light intensity level of this new status, e.g. status "Z" (representing that the fibre unit has exited the conduit and is in contact with or impinging upon the diaphragm membrane) is one sufficiently distinguishable from each of those of the two previous states "X" (representing lack of air flow within the housing), and "Y" (air flow present but no fibre unit contact with the diaphragm member), to allow the processor (22) to generate the appropriate status signals. Status signal "Z" is generated by the processor (22) and conveyed to the engineer via the radio channel (3) as a status signal (28) that the fibre unit has arrived and that the installation process is complete. In a preferred embodiment, the blown fibre installation apparatus may be arranged to respond to the receipt of status signal "Z" by having the installation apparatus turned off automatically, as will be further discussed below in connection with Figure 7.

Due to the typical distances required for the transmission and reflection of the light beam in a device configured to work with a conduit size of typically 3mm in the case of small-bore conduits, up to 15mm and more for large bore conduits, the housing of the device comprises the shape shown in e.g. Figure 1B i.e. a substantially tubular structure tapering to a narrower portion which connects to the conduit end. The skilled person would appreciate that it is possible to use device housings having other dimensions, e.g. if with a conduit of a different size. For example, the housing could comprise a tube with a uniform diameter substantially the same as that of the conduit. In such a case, the angles, distances and other dimensions of the components within the housing can be calculated to obtain the desired detections of light signals indicating the existence of statuses "X", "Y" and where relevant, "Z".

As the skilled person would be aware, the components of the sensor device can be used in various combinations and can be substituted by various other components. Some exemplary alternative embodiments will now be discussed.

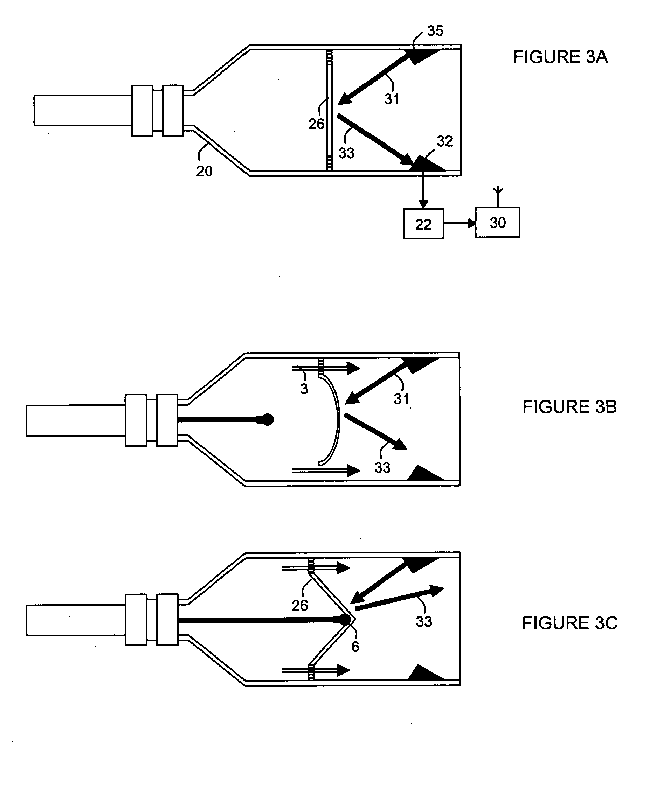

Figures 3A to 3C show the configuration and use of an alternative embodiment of the invention. This version of the device comprises the same components as the above-discussed embodiment, save that they are re-arranged so that the light beam (31) and the reflected beam (33) are directed to and from the reverse or opposite surface of the flexible member (26). The optical transmitter (35) and receiver (32) are relocated to the exhaust end of the housing on the other side of the diaphragm arrangement as shown in Figure 3A. In this embodiment, the diaphragm member can comprise the reflective surface on only the side facing the exhaust end of the housing, although of course it could be reflective on both surfaces. In the "ready" state when neither air or fibre unit is present within the device housing, almost all the light from the light source (35) bounces off the reflective surface of the diaphragm member (26) and is received by the optical receiver (32) in status "X".

The device works in the same way as the previous embodiment to detect air and fibre unit arrival as shown in Figures 3B and 3C. The airflow (3) upon arrival distends the flexible diaphragm membrane (26) so that it bulges gently outwards in the direction of the airflow. The light beam now reflects on the now-convex section of the membrane member, and this results in displacement of the preferably narrow light beam (31) as illustrated in Figure 3B so that it is received by the optical receiver at an angle which reduces the amount of light detected. This is processed and sent back to the operator as status signal "Y". Subsequent fibre arrival, as illustrated in Figure 3C, is detected when the reflected light signal detected by the receiver is processed into a lower, or zero light status signal "Z".

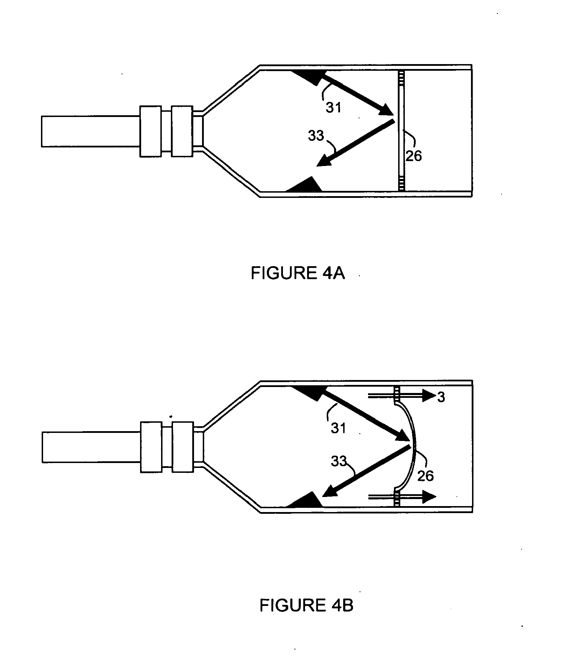

Yet another variation is illustrated in Figures 4A and 4B, where the transmitted light beam (31) is directed to the reflective diaphragm (26) in a manner so that less than the full, or maximum, level of light is detected by the receiver as shown in Figure 4A.

This now serves as the basis for the processor to generate a status signal "X" for transmission back to the operator at the head end, and can comprise a reduced level of light, or a zero level of light. Upon arrival of the airflow, the angle and direction of the reflected light beam (33) are deflected as shown in Figure 4B. Various parameters of the airflow (e.g. air pressure levels, speed of flow, etc.) from the conduit into the housing can be predicted, as these are known when the air is fed into the conduit at the head end. As such, the extent of displacement or deflection of the light beam can be calculated so that the reflected light beam (33) now shines directly into the optical receiver so that the maximum light is detected. This increase in the detected intensity level is processed for a status signal "Y" to be generated.

Thus, it is within the scope of the invention for the status change from "X" to "Y" to be triggered by either a decrease or an increase in the light level detected by the optical receiver. All that is needed is a sufficiently unambiguous change in the detected light levels that would allow a suitably-configured processor to identify as a status change.

To further detect the arrival of the fibre unit cable in the embodiment of Figures 4A and 4B, the bead would, as in previous versions, impinge on the flexible membrane so as to further displace it. At this stage, the reflected light beam (33) can be redirected to the original angle and direction of the reflected beam shown in Figure 4A, or it can be directed to a yet other direction. This may be a third light level detectable by the optical receiver, or it could be a zero light level. Again, the invention requires only that a sufficiently clear light level change be detected from the previous light level, to indicate a status change which can be communicated back to the head end.

This version of the invention can also be used in a sensor device configured as shown in e.g. Figure 3A.

The above description thus far is directed to the combined sensing of air and fibre unit arrival at the far end. As briefly noted above, it is also possible to use the sensor unit for detection for the arrival of either air, or the fibre unit, although there are of course advantages in using the same unit to detect one after the other during the same one blown fibre installation session. Where the sensor device is used to detect both air and fibre unit arrival in a single session, the light levels signifying the status changes need not be three different values. So status "X" and "Z" may be represented by the same, or identical, light level which is distinguishable from the level of status "Y". Alternatively, the levels of "X", "Y" and "Z" may represent light levels in an ascending or descending order.

Various requirements and factors in the field and during manufacturing might determine that either one of the above embodiments is more useful than the other. One consideration is the need to access the interior of the housing for cleaning or replacement of the components, in particular the flexible diaphragm. The cost of the diaphragm may be so low that it may be a preferred practice to install a new diaphragm for each blown fibre installation session. The reflective polymer plastic making up the diaphragm may become dirty and marked, and permanently indented under the pressure of the impinging bead. The dirt would affect its reflective property, and the inability to recover a flat surface will impair the device's ability to detect the full or maximum amount of light signifying status "X". To avoid this loss of operational effectiveness, replacing the diaphragm as a matter of course for every few, or even each, subsequent installation, may be preferred practice in the field.

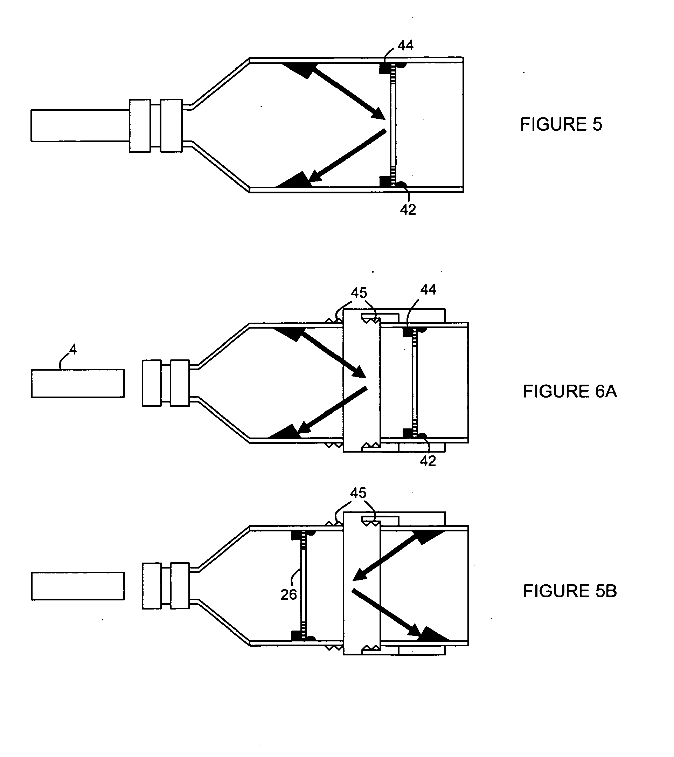

The requirement for an accessible device housing is catered for by the next two exemplary embodiments shown respectively in Figures 4 and 5.

Figure 5 is a first example of a sensor device which allows access to the housing interior, which substantially comprises the arrangement of the embodiment discussed against Figure 1 above. In this case the housing is a single unit where the diaphragm is held in position within the housing using a snap-fit arrangement comprising a retaining ring (42) and a support "O"-ring (44). This allows for the operator to reach into the device from the open exhaust end of the housing, and for a new diaphragm to be inserted.

In a variation on the embodiment of Figure 5, the housing comprises two parts, a first end connectable to the conduit, and within which the optical transmitter and receivers are located. The second end comprises the exhaust end and includes the housing opening through which the airflow vents. The two parts are held together by the snap-fit arrangement. The tightness of the fit or seal is not critical to the operation of the device, so a simple snap-fit connection will work sufficiently well. In a preferred arrangement, the diaphragm is held in place within the housing between the two parts of the housing upon the cooperation of the rings making up the snap-fit arrangement. This allows for the unit to be opened, allowing e.g. for the entire diaphragm arrangement to be readily removed for cleaning or replacement. Alternatively, the diaphragm arrangement can be anchored to the inner wall of the exhaust end part of the housing, allowing for that end, together with the spent diaphragm, to be discarded and replaced.

While optical alignment of the reflective surface of the diaphragm arrangement is important, in this location and in this way it is not likely to give rise to problems as the optical detection method has an inherent tolerance to the reading of a range of values, which is enhanced by the configuration of the processor to read a predefined range of signal level values as being indicative of a specific status.

Alternative embodiments of accessible sensor devices of the invention are depicted in Figures 6A and 6B, where the housing is in two parts connected to each other using a screw-fit arrangement (45), comprising corresponding sets of internal and external screw threads provided on the outer surface of the housing as shown. Figure 6A shows an arrangement of the operative components of the device similar to the embodiment described against e.g. Figure 1A, while Figure 6B depicts a version including an arrangement of the type discussed in connection with e.g. Figure 3A.

Like the embodiment shown in Figure 5, these versions allow the operator easy access to the interior of the housing, to allow for e.g. cleaning of the reflective surface. This is also mounted in a removable manner within the housing, allowing the operator to reach within for easy access and removal. Preferably, the diaphragm arrangements are removeably attached within the housing using a simple snap fit arrangement as shown in e.g. Figure 6A.

The location of the diaphragm arrangement in the exhaust end portion of the housing shown in Figure 5A allows for the housing portion containing the used component to be disposed after one or more uses. Alternatively, the portion of the housing used for connection to the conduit in the embodiment shown in Figure 5B, which contains the diaphragm, may also be discarded and replaced.

Figure 7 depicts the main apparatus components located at the head end of the optical fibre conduit or tube, where the operator is located. There, he operates a blowing head which controls the forces propelling an optical fibre unit (2) into the conduit or tube (4), which forces comprise a pair of drive wheels (6) and a supply of pressurised air (8) typically from a compressor. The drive wheels mechanically drive the fibre unit into the tube, while the compressed air is fed into the conduit to create within it the laminar air flow which will bear the fibre unit along and through the tube.

The blowing head may be capable of detecting that the fibre unit is no longer progressing through the tube - which could be a result of the fibre arriving at the remote end, or else it is otherwise caught or stuck within the tube. In response, the blowing head stops the drive wheels from further pushing the fibre unit into the tube. The receipt (or non-receipt) of confirmation that the fibre bead has arrived at the remote end via the radio receiver (5) allows the operator to decide what to do next: to end the successful installation, or else to take remedial action. The reading from the air flow meter provides yet further confirmatory information about fibre unit arrival, as described below.

When the fibre unit arrives at the remote end and the bead embeds in and makes contact with the flexible diaphragm, one of two things can happen, depending on how the device is configured. If the diaphragm is made of a material designed to resist further advance of the beaded fibre unit cable, that resistance will be detected at the head end by the blowing head in terms of there being no further fibre unit movement at the head end. If on the other hand, the diaphragm is fabricated to rupture under pressure from the advancing fibre unit, a distinctive air flow pattern can be discerned: a relatively constant during the installation process, followed by a relatively suddenly rise following the rupture of the membrane, since the absence of the membrane allows air to flow more rapidly through the device. This pattern can be detected at the head end by installing an air flow meter (9) at the air compressor (8).

In a preferred embodiment, the head end apparatus (in the main, the blowing head and the air compressor) is configured to respond (7) to the receipt of a signal indicative of fibre arrival at the remote end, by terminating the installation session e.g. by turning themselves off, or going into a standby mode. There is a particular synergy in doing so in the case of the blowing head, due to this component's already-existing capability to sense lack of further progress of the fibre within the tube: receipt of the fibre arrival signal confirms the cause of the lack of fibre progress. Similarly, the apparatus at the head end could be configured to respond to the initial signal that air is flowing from the remote end conduit, by automatically starting the fibre installation process.

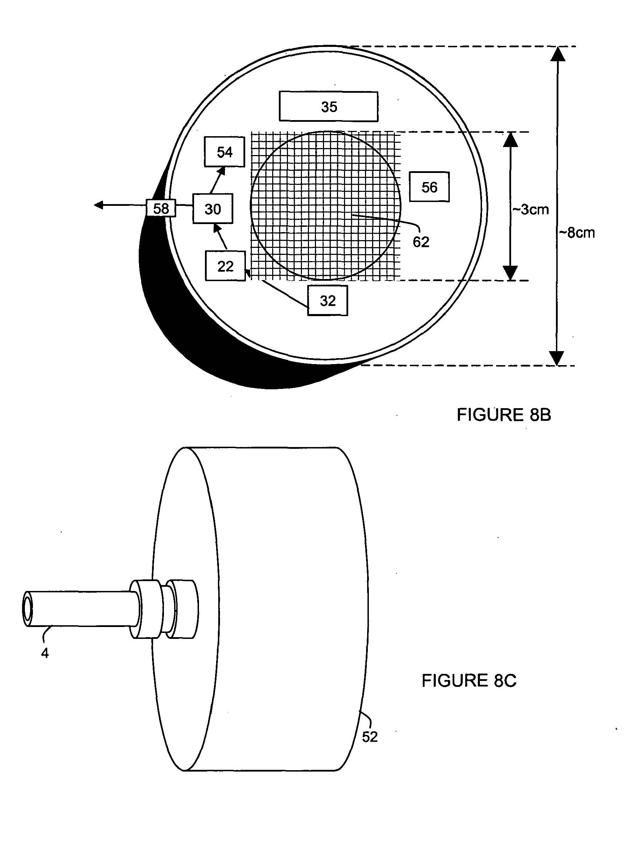

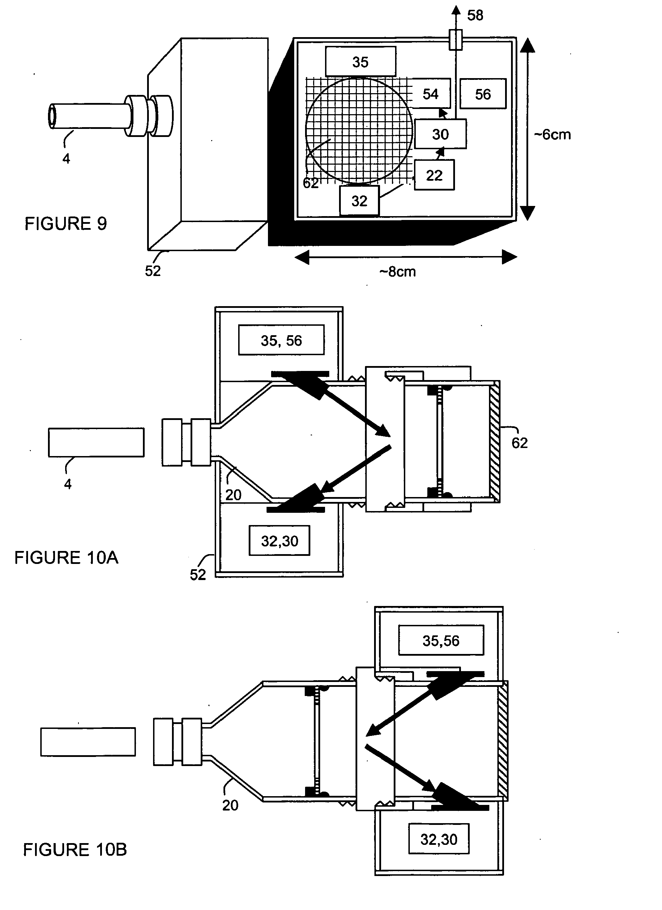

Figures 8 and 9 depict two embodiments of the full enclosure surrounding the device, which may be about 5 cm long and 8 cm wide for use with a conduit having an external diameter of typically 3mm in the case of small-bore conduits, up to 15mm and more for large bore conduits. In a preferred embodiment the coupling flange (21) fixed to the housing may be adjustable to tightly fit the conduit in use, or the coupling flange may be removable from the housing whereupon the correct sized flange for the conduit in use is selected from a range of fix sizes and then attached to the housing. In either case the flange ensures a mechanically robust and air tight coupling between the housing and the conduit.

Figures 8A to 8C are views of an embodiment of the device of the invention including its cylindrical outer enclosure (52). This embodiment shown in Figure 8A can be manufactured as a unitary piece comprising a single injection moulding plastic section where the outer enclosure accommodates the inner tubular housing (20), the optical components (32, 35), the circuit boards (35) and dry cell battery (56). An external view of the enclosure can be seen in Figure 8C. A fine gauze dust shield (62), visible in the cross-sectional view of the device in Figure 8B is provided on the exhaust end of the sensor device housing to prevent or discourage contamination of the interior of the device. The shield is not essential to the working of the invention, but it is of a reasonably robust construction, and contributes to the strength of the device housing. It will also resist the onward advance of the fibre unit cable from beyond the housing during an installation, where this is deemed desirable or necessary.

The only service-removable part is the battery cover protecting the battery (56) on the outer enclosure surface. Should it be found desirable to replace the dust shield, then this too could be made to be service-removable. A minimal number of service-removable parts is however advantageous for easy maintenance.

An internal antenna (54) used for transmitting RF signals about air and fibre arrival to the head end, may be incorporated within the enclosure, or alternatively an external antenna (58) could be used for greater range/gain in operational situations where radio reception may be impaired (e.g. down a manhole). Ideally, the fibre conduit at the remote end is long enough to extend the fibre conduit route to ground/surface level for the purposes of the installation process, in which case radio reception is improved and a reliable channel may be established with the head end operator. Should there be insufficient length of conduit, a bridging length of dummy conduit can be temporarily attached for purposes of the installation.

Figures 9 represents a cross section of an alternative outer enclosure (52) consisting a simple injection-moulded box, and the contents therein.

Figures 10A and 10B depict the outer enclosures (64) for the screw-fit modular version of the device which allow the operator access to the interior of the housing for purposes of e.g. maintenance, or for replacement of the diaphragm member. In these implementations, the outer enclosures tend to afford robust protection only on the section of the housing which contains the optical transmission and receiving components, as in certain embodiments and uses of the device, the housing part containing the diaphragm arrangement may be disposed of after one or more uses.

The methods, devices, components and configurations described above and in the drawings are for ease of description only and not meant to restrict the invention to any particular embodiments. It will be apparent to the skilled person that various sequences and permutations on the methods and devices described are possible within the scope of this invention as disclosed; similarly the invention could be used in various similar scenarios and for various cable and conduit types and sizes. In particular, the apparatus and methods relating to airflow detection and the methods and apparatus relating to fibre arrival detection are depicted in this description to be used together in a preferred embodiment. However they will work independently of each other on their own.

## Claims

1. A device for use with a conduit having a first conduit end and a conduit second end, into which conduit a cable can be installed using a flow of air into the first conduit end, the device being suitable for confirming that the air is flowing out of the from the second conduit end, the device comprising
- a housing,
- means to enable connection of the device to the second conduit end,
- a light source to output a light beam onto a reflective surface,
- an optical receiver to detect a reflected light beam comprising a reflection of the light beam from the reflective surface,
- a detector arranged to detect a light level or a change in a light level,
wherein the reflective surface is configured to distend in a flow of air, so that in use, the optical receiver detects a changed level in the reflected light beam.

2. A device according to claim 1 wherein the device further comprises a transmitter for transmitting a status signal indicative of whether the air is flowing out from the second conduit end.

3. A device according to claim 1 or claim 2 wherein the reflective surface comprises a flexible diaphragm positioned in the housing so that in use the flow of air bears against the reflective surface in a substantially orthogonal direction.

4. A device according to any preceding claim further including a vent for a part of the flow of air to flow beyond the reflective surface within the housing.

5. A device according to claim 4 wherein the reflective surface is mounted on a ring arrangement which is attached to the housing, and therein the vent comprises part of the ring arrangement.

6. A device according to claim 5 wherein the ring arrangement is detachably attached to the housing.

7. A device according to any preceding claim wherein in use the optical receiver detects a reduced level in the reflected light beam following a distension in the reflective surface.

8. A device according to any preceding claim further including a processor configured to output a first status signal indicating an absence of the flow of air within the housing, and a second status signal indicating a presence of the flow of air within the housing following detection of a changed level in the reflected light beam by the detector.

9. A device for use with a conduit having a first conduit end and a conduit second end, into which conduit a cable can be installed using a flow of air into the first conduit end, the device being suitable for confirming that the cable is exiting the second conduit end, the device comprising
- a housing,
- means to enable connection of the device to the second conduit end,
- a light source to output a light beam onto a reflective surface,
- an optical receiver to detect a reflected light beam comprising a reflection of the light beam from the reflective surface,
- a detector arranged to detect a light level or a change in a light level,
wherein in use, the cable impinges upon and distends the reflective surface, so that the optical receiver detects a changed level in the reflected light beam.

10. A device according to claim 8 wherein in use the optical receiver detects a reduced level in the reflected light beam following a distension in the reflective surface.

11. A device according to any preceding claim wherein the reflective surface is configured to rupture upon the cable impinging on the reflective surface.

12. A device according to claim 1 further being suitable for confirming that the cable is exiting the second conduit end, wherein the reflective surface is configured to distend to a first degree in the flow of air, and to distend to a further degree upon the cable impinging upon the reflective surface.

13. A device according to any preceding claim wherein the housing comprises a plurality of parts removeably attached to each other.

14. A device according to claim 13 wherein the reflective diaphragm is configured to be removable for replacement.

15. A system for use with a conduit having a first conduit end and a conduit second end, into which conduit a cable can be installed using a flow of air into the first conduit end, comprising a device according to any one of claims 1 to 8 for confirming that the air is flowing out from the second conduit end.

16. A system for use with a conduit having a first conduit end and a conduit second end, into which conduit a cable can be installed using a flow of air into the first conduit end, comprising a device according to any one of claims 9 to 11 for confirming that the cable is exiting the second conduit end.

17. A system for use with a conduit having a first conduit end and a conduit second end, into which conduit a cable can be installed using a flow of air into the first conduit end, comprising a device according to claim 12 for confirming that the air is flowing out, and that the cable is exiting, the second conduit end.

18. A method for use with a conduit having a first conduit end and a conduit second end, into which conduit a cable can be installed using a flow of air into the first conduit end, and to confirm that the air is flowing out from the second conduit end, the method comprising
- attaching a device of any one of claims 1 to 8 to the second conduit end,
- applying the flow of air into the first conduit end,
- causing a light level change, and
- detecting the light level change.

19. A method according to claim 18 wherein the step of causing the light level change comprises distending the reflective surface of the device.

20. A method according to claim 18 or claim 19 using the device of any one of claims 2 to 8, further including the step of transmitting a signal comprising the detected light level.

21. A method according to any one of claims 18 to 20 to further confirm that the cable has exited the second conduit end, including
- connecting a bead to an end of the cable,
- installing the end of the cable into the first conduit end, and
- causing a further light level change detected by the detector.

22. A method according to claim 21 wherein the step of causing the further light level change comprises further distending the reflective surface of the device.

23. A method according to any one of claims 20 to 22 further including
- transmitting a signal comprising either the light level change or the further light level change to apparatus located at the first conduit end, and
- causing the apparatus at the first conduit end to automatically respond to the transmitted signal.

24. A method according to any one of claims 17 to 23 wherein the step of detecting the light level change comprises detecting in a sequence, a high light level, a reduced a light level, and a further reduced a light level.
